# EUROPÄISCHE PATENTANMELDUNG

(11) **EP 2 143 664 A2**
(43) Veröffentlichungstag der Anmeldung: **13.01.2010**
(21) Anmeldenummer: 09005677.1
(22) Anmeldetag: 22.04.2009
(51) Int. Cl.: B65D 88/12, B65D 88/54, B60P 1/54, B01F 13/10, B01F 3/12, B01F 7/08, B01F 15/02, B01F 5/10, B01F 7/18, B01F 15/04, E04H 5/02

(54) **Kompaktanlage und Verfahren zur Suspensionsaufbereitung**

(30) Priorität: 10.07.2008 DE 202008009297 U
(71) Anmelder: MAT Mischanlagentechnik GmbH, 87509 Immenstadt-Seifen (DE)
(72) Erfinder: Kleimeier, Manfred, 87527 Sonthofen (DE)
(74) Vertreter: Wunderlich, Rainer

(57) **Zusammenfassung**

Die Erfindung betrifft eine Kompaktanlage und ein Verfahren zur Suspensionsaufbereitung mit Komponenten zum Zuführen mindestens einer Flüssigkeit und mindestens eines Feststoffes, welche in einem Suspensionsbehälter (2) zu einer Suspension vermischt und aufbereitet werden, wobei die Komponenten und der Suspensionsbehälter (2) in einem containerförmigen Rahmengestell (1) angeordnet sind und auf einer Oberseite des Rahmengestells eine Lager- und/oder Arbeitsbühne (22) vorgesehen ist.

## Beschreibung

Die Erfindung betrifft eine Kompaktanlage zur Suspensionsaufbereitung mit Komponenten zum Zuführen mindestens einer Flüssigkeit und mindestens eines Feststoffes, welche in einem Suspensionsbehälter zu einer Suspension vermischt und aufbereitet werden. Die Erfindung betrifft weiterhin ein Verfahren zur Suspenisonsaufbereitung.

Solche Anlagen zur Suspensionsaufbereitung sind bekannt und werden etwa auf Baustellen zum Herstellen aushärtbarer Suspensionen eingesetzt, wie sie beispielsweise für Stütz- und Dichtwände in Spezialtiefbau benötigt werden. Die bisherigen Anlagen sind aufwendig in der Montage und stellen etwa auf engen, innerstädtischen Baustellen eine erhebliche Platzbeeinträchtigung dar.

**Aufgabe** der Erfindung ist es, eine Kompaktanlage und ein Verfahren zur Suspensionsaufbereitung anzugeben, welche im Arbeitseinsatz effizient und platzsparend ist.

Diese Aufgabe wird durch eine Kompaktanlage zur Suspensionsaufbereitung mit den Merkmalen des Anspruchs 1 bzw. ein Verfahren nach Anspruch 13 gelöst. Bevorzugte Ausgestaltungen sind in den abhängigen Ansprüchen angegeben.

Eine erfindungsgemäße Kompaktanlage zur Suspensionsaufbereitung ist **dadurch gekennzeichnet, dass** die Komponenten und der Suspensionsbehälter in einem containerförmigen Rahmengestell angeordnet sind und dass auf einer Oberseite des Rahmengestells eine Lager- und/oder Arbeitsbühne vorgesehen ist.

Ein Grundgedanke der Erfindung kann darin gesehen werden, eine Anlage zur Suspensionsaufbereitung so kompakt zu bauen, dass sie als fertige Einheit transportierbar ist. Das kasten- oder gerüstförmige Rahmengestell weist vorzugsweise die Abmessungen von Standardcontainern auf, so dass ein Transport mit üblichen Lkw und Kranen möglich ist. Alle Komponenten der Anlage sind in dem Rahmengestell angebracht. Dadurch kann die Anlage weitgehend fertig montiert mit geringem Aufwand zu neuen Einsatzorten transportiert werden. Darüber hinaus ermöglicht die Lager- und Arbeitsbühne auf der Oberseite eine gute Zugänglichkeit und Bedienbarkeit bei geringem Platzbedarf auf Baustellen oder ähnlichen Einsatzorten.

Erfindungsgemäß ist es besonders bevorzugt, dass auf der Oberseite des Rahmengestells eine Hebeeinrichtung zum Heben und/oder Transportieren von Arbeitsmaterialien auf die Lager- und/oder Arbeitsbühne angeordnet ist. Hierdurch erreicht man, dass Arbeitsmaterialien ohne weitere Hilfsmittel auf die Oberseite des containerförmigen Rahmengestells gehoben und dort gelagert oder der Anlage zugeführt werden können. Dies verringert den Platzbedarf auf Baustellen weiter und sorgt Beschädigungen der Arbeitsmateriaiien vor. Mit dieser Hebeeinrichtung ist es weiterhin möglich, diese Arbeitsmaterialien, nachdem sie auf die Lager- und/oder Arbeitsbühne gehoben wurden, auf derselben frei zu bewegen.

Weiterhin ist es erfindungsgemäß bevorzugt, dass die Hebeeinrichtung zum Transport der Kompaktanlage einklappbar ist. Hierdurch wird erreicht, dass die Kompaktanlage von einem Arbeitszustand einfach in einen kompakten Transportzustand umgebaut werden kann. In diesem Transportzustand befinden sich alle Komponenten der Kompaktanlage innerhalb eines Grundrahmens.

Eine besonders bevorzugte Ausführungsform der Erfindung ist **dadurch gekennzeichnet, dass** die Hebeeinrichtung als ein Laufkatzkran mit einer Laufkatze ausgebildet ist, welche entlang von mindestens einer Schiene verfahrbar ist, und dass die Schiene mittels gelenkigen Portalstützen zwischen einer Arbeitsposition und einer Transportposition verschwenkbar ist. Hierdurch können auf der Lager- und/oder Arbeitsbühne gelagerte Lasten oder Arbeitsmaterialien bequem entlang der Oberseite des Rahmengestells bewegt werden. Hierbei ist es sinnvoll, wenn eine einzelne Schiene mittig entlang der Längsseite des containerförmigen Rahmengestells verläuft. Durch die gelenkigen Portalstützen kann die Schiene in einfacher Weise von einer Arbeitsposition, in der der Laufkatzkran mit einer Rolleneinrichtung entlang der Schiene verfahrbar ist, in eine Transportposition, in der die Schiene auf der Oberseite des Rahmensgestells flach anliegt, verschwenkt werden.

In diesem Zusammenhang ist eine weitere besonders vorteilhafte Ausführungsform der Erfindung **dadurch gekennzeichnet, dass** die Lager- und/oder Arbeitsbühne durch Gitterrostelemente gebildet ist. Diese Ausführungsform zeichnet sich dadurch aus, dass die Gitterrostelemente leicht sind und eine weiterhin gute Zugänglichkeit und Einsehbarkeit von oben erlauben.

Zum einfachen Transport und Verladen der Kompaktanlage ist in einer weiteren vorteilhaften Ausgestaltung der Erfindung vorgesehen, dass das Rahmensgestell Containerecken aufweist. Dies ermöglicht das einfache Stapeln und Verladen einer erfindungsgemäßen Kompaktanlage. Hierbei ist auch vorstellbar, dass mehrere Kompaktanlagen übereinander gestapelt gemeinsam transportiert oder verschifft werden. Solche Containerecken erleichtern den Transport und das Verladen erheblich.

Erfindungsgemäß ist weiter vorgesehen, dass die Oberseite des Rahmengestells durch eine Treppe oder Leiter mit einer Unterseite des Rahmengestells verbunden ist. Hierdurch kann ein Benutzer einer erfindungsgemäßen Kompaktanlage zur Suspensionsaufbereitung im unteren Teil der Kompaktanlage Vorkehrungen zur Suspensionszubereitung treffen und auf der Oberseite des Rahmengestells die dazu benötigten Feststoffe, insbesondere in Pulverform, in den entsprechenden Nachfüllvorrichtungen zur Verfügung stellen.

Eine besonders bevorzugte erfindungsgemäße Ausgestaltung der Kompaktanlage zur Suspensionsaufbereitung ist **dadurch gekennzeichnet, dass** die Kompaktanlage mindestens einen Anschluss zum Zuführen von Flüssigkeiten und mindestens eine Öffnung zum Zuführen von Feststoff aufweist, wobei der mindestens eine Anschluss und/oder die mindestens eine Öffnung an der Oberseite des Rahmengestells ausgebildet sind. Durch diese Anschlüsse, welche z.B. durch Rohranschlüsse realisiert sein können, oder Öffnungen ist es in einfacher Weise möglich, diejenigen Flüssigkeiten oder Feststoffe zuzuführen, die zum Mischen einer Suspension notwendig sind. Hierbei ist es nicht unbedingt notwendig, dass sich diese Anschlüsse an der Oberseite des Rahmengestells befinden, andere Positionen am Rahmengestell oder am Außengehäuse der Kompaktanlage sind ebenfalls denkbar. Bei einer weiteren Ausführungsform wäre es vorteilhaft, dass darüber hinaus ein Anschluss zum Fördern der hergestellten beziehungsweise aufbereiteten Suspension bereitgestellt ist.

In diesem Zusammenhang ist eine weitere besonders vorteilhafte Ausführungsform der Erfindung **dadurch gekennzeichnet, dass** der Suspensionsbehälter ein Schneckenrührwerk aufweist. Dadurch können die verwendeten Flüssigkeiten und Feststoffe effektiv und in einfacher Weise zu einer homogenen Suspension verrührt werden.

Ferner ist erfindungsgemäß vorgesehen, dass ein Zuführbehälter für pulverförmige Feststoffe über eine Dosierschnecke mit einem Kolloidalmischer verbunden ist. Durch die zwischengeschaltete Dosierschnecke ist es in vorteilhafter Weise möglich, die Menge des verwendeten pulverförmigen Feststoffs genau zu dosieren. In dem Kolloidalmischer werden für gewöhnlich Flüssigkeiten mit pulverförmigen Feststoffen zu einem Kolloid vermischt, welches dann in den im Inneren der Kompaktanlage befindlichen Suspensionsbehälter befördert wird. Mit diesem kontinuierlichen Kolloidalmischer ist eine vielseitige Verwendbarkeit, optimale Suspensionsqualltät und hohe Mischleistung gewährleistet. Neben diesen Komponenten der Anlage können auch weitere Vorrichtungen, Geräte und Aggregate vorgesehen sein.

Zur Erhöhung der Arbeitssicherheit ist es erfindungsgemäß, dass die Lager- und/oder Arbeitsbühne mit einem umlaufenden, abnehmbaren Geländer versehen ist. Hierzu können im Bereich der Arbeitsbühne Bohrungen oder hülsenförmige Aufnahmen vorgesehen sein, in welche Aufnahmezapfen von Geländerelementen einsteckbar sind.

Zum Schutz vor Witterungseinflüssen ist es nach der Erfindung vorteilhaft, dass eine Plane vorgesehen ist, mit welcher die Lager- und/oder Arbeitsbühne überdeckbar ist. Hierzu kann die mittig verlaufende Schiene der Hebeeinrichtung als eine Art Firstbalken verwendet werden. Auf diesen kann die Plane aufgelegt werden, so dass die Lager- und/oder Arbeitsbühne und die darauf gelagerten Materialien und Geräte zeltartig überdacht sind. Entlang den Seitenkanten der Arbeitsbühne können entsprechende Verzurrösen oder andere Halteeinrichtungen zum Verzurren und Befestigen der Plane vorgesehen sein.

Die Erfindung umfasst grundsätzlich auch Verfahren, welche mittels der Kompaktanlage durchgeführt werden können.

Ein Verfahren zum Betreiben einer erfindungsgemäßen Kompaktanlage zur Suspensionsaufbereitung umfasst die Verfahrensschritte:
- Vermengen von Wasser und Zusatzstoffen zu einer Suspension;
- Pumpen der Suspension von einem Kolloidalmischer zu einem Suspensionsbehälter;
- Verrühren der Suspension im Suspensionsbehälter durch ein Schneckenrührwerk; und
- Pumpen der Suspension vom Suspensionsbehälter mittels einer Pumpe über eine Förderleitung zu einer Verbrauchsstelle.

Die Erfindung wird nachfolgend anhand der beiliegenden Figur eines bevorzugten Ausführungsbeispiels weiter beschrieben. Die einzige Figur zeigt eine schematische Querschnittsansicht einer erfindungsgemäßen Ausführungsform einer Kompaktanlage zur Suspensionsaufbereitung.

Eine erfindungsgemäße Kompaktanlage zur Suspensionsaufbereitung 30 weist ein Rahmengestell 1, ein an einem klappbaren Kranbahngerüst 10 angebrachten Laufkatzkran 11, welcher am oberen Ende des Rahmengestells 1 angebracht ist, sowie mehrere Komponenten im Inneren des Rahmengestells 1 auf. Die Hauptkomponenten im Inneren des Rahmengestells 1 sind ein Suspensionsbehälter 2, ein trichterförmiger Zuführbehälter 4 für pulverförmige Zusatzstoffe, ein kontinuierlicher Kolloidalmischer 7 sowie eine Pumpe 8 zum Fördern der Suspensionen.

Der zur Suspensionszubereitung benötigte Feststoff wird über Behälter 4 für pulverförmige Zusatzstoffe aufbewahrt und zugeführt. Die pulverförmigen Zusatzstoffe werden über ein Auflockerungs-Rührwerk 5, welches einen drehzahlverstellbaren Motor M aufweist, zunächst in eine Dosierschnecke 6 geleitet. Das Auflockerungs-Rührwerk 5 garantiert hierbei einen definierten Füllgrad der Dosierschnecke 6. Die Dosierschnecke 6 verfügt ebenfalls über einen drehzahlverstellbaren Motor M. Die pulverförmigen Zusatzstoffe werden aus der Dosierschnecke 6 unter Beimischung von Wasser aus dem Wasseranschluss A in den Kolloidalmischer 7 befördert. Das Mischungsverhältnis im Kolloidalmischer 7 zwischen Flüssigkomponente und Feststoff wird mit dem Wasserzulaufventil 12, einem Zulaufventil 13 für Suspensionen, einem am Kolloidalmischer 7 angebrachtem Durchflussmesser 21 und eine Drehzahlverstellung des Motors M der Dosierschnecke 6 eingestellt. Der Kolloidalmischer 7 verfügt ebenfalls über einen drehzahlverstellbaren Motor M.

Die im Kolloidalmischer 7 hergestellte Suspension wird sodann durch ein Rohrleitung 25 nach oben in den Suspensionsbehälter 2 zurückgeführt, wo ein mit einem drehzahlverstellbaren Motor M ausgestattetes Schneckenrührwerk 3 die Komponenten der Suspension verrührt. Das horizontal gelagerte Schneckenrührwerk 3 kann je nach Drehrichtung und Drehzahl das Absetzen von Feststoffpartikeln verhindern und/oder Sedimente in Richtung des Behälterauslaufs fördern.

Die im Suspensionsbehälter 2 befindliche Suspension kann über ein Behälter-Absperrventil 15, die Pumpe 8 sowie ein Förderleitungs-Absperrventil 17 in eine Förderleitung B gefördert werden. Die Suspension kann ebenfalls über ein zwischen der Pumpe 8 und dem Förulerleitungs-Absperrventil 17 befindliches Umpumprohr 26 mit Umpumpventil 16 einer oben außerhalb des Rahmengestells 1 befindlichen Venturidüse 9 mit Sackaufgabetrichter zugeführt werden. Durch den Sackaufgabetrichter können pulverförmige Zusatzstoffe mittels der Venturidüse 9 dem Umpumprohr 26 zugeführt werden. Sodann wird die Suspension von oben in den Suspensionsbehälter 2 eingeleitet.

Zwischen dem Behälter-Absperrventil 15 und der Pumpe 8 kann ebenfalls Wasser über das Wasserzulaufventil 14 dem Suspensionsbehälter 2 oder der Pumpe 8 zugeführt werden.

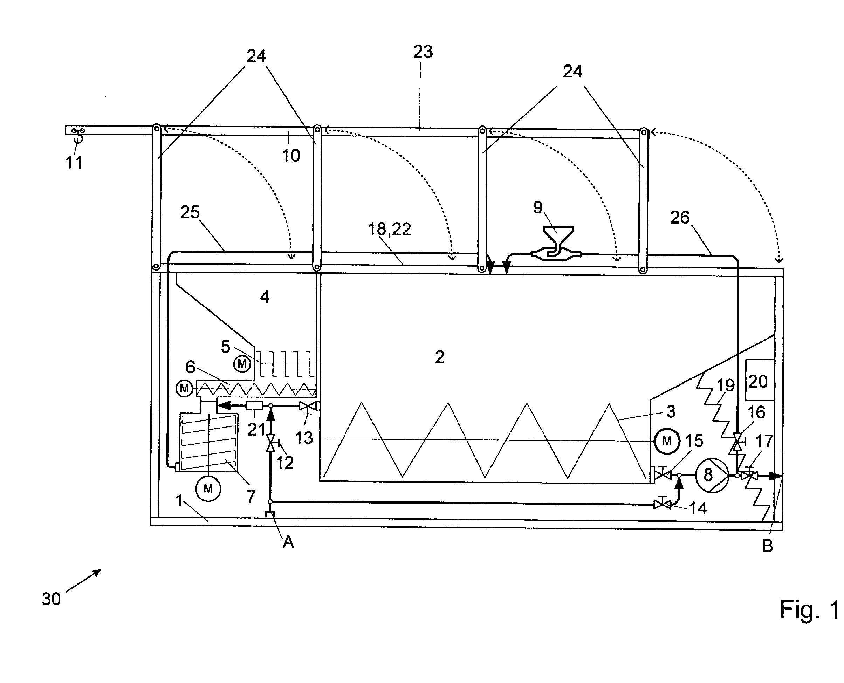

Der Laufkatzkran 11 mit Laufkatze ist an einer mittig verlaufenden Schiene 23 angeordnet, welche ihrerseits an der Gitterrostbühne 18 über gelenkige Portalstützen 24 befestigt ist. Die Schiene 23 befindet sich in Fig. 1 in der herausgeklappten Arbeitsposition, in welcher der Kran über die Abmessungen des Rahmengestells 1 hinausragt. Um in die Transportposition zu gelangen, wird die Schiene 23 mittels der Portalstützen 24 entlang der eingezeichneten Pfeilrichtungen auf die Gitterrostbühne 18 geklappt, so dass die Schiene 23 flach auf der Gitterrostbühne 18 anliegt. Die Länge und Lagerung der Schiene 23 an der Oberseite des Rahmengestells 1 ist so ausgelegt, dass die Schiene 23 in der Transportposition nicht über das Rahmengestell 1 hinausragt.

Über eine Treppe 19 kann ein Bediener vom unteren Teil der Kompaktanlage 30 auf die Oberseite des Rahmengestells 1 gelangen. An der Oberseite des Rahmengestells 1 befindet sich eine begehbare Gitterrostbühne 18. Auf dieser als Lager- und/oder Arbeitsbühne 22 verwendeten Gitterrostbühne 18 kann ein Benutzer mit Hilfe der Laufkatze des Laufkatzkrans 11 Arbeitsmaterialien, welche angeliefert werden, vom Boden oder der Ebene des unteren Teils des Rahmengestells 1 auf die Ebene der Gitterrostbühne 18 befördern. Unter Arbeitsmaterialien können hier insbesondere die zur Herstellung der Suspension benötigten Feststoffe und Zusatzstoffe verstanden werden.

Die für gewöhnlich in Big-Bags gelagerten, pulverförmigen Zusatzstoffe können oberhalb des Zuführbehälters 4 für pulverförmige Zusatzstoffe aufbewahrt werden, um den Zuführbehälters 4 zu befüllen beziehungsweise nachzufüllen. Weiterhin ist es möglich, die pulverförmigen Zusatzstoffe über die Venturidüse 9 mit Sackaufgabetrichter in den Suspensionsbehälter 2 einzuführen.

Das Kranbahngerüst 10 mit Laufkatzkran 11 kann von einer Arbeitsposition in eine Transportposition geklappt werden, in welcher ein Transport des containerförmigen Rahmengestells 1 leicht und komfortabel möglich ist. Hierbei muss die Venturidüse 9 ebenfalls im Inneren des Rahmengestells 1 verstaut werden.

Beim Transport der Kompaktanlage 30 können gegebenenfalls die zur Herstellung der Suspension benötigten Zusatzstoffe in gewissem Umfang in den entsprechenden Lagerbehältern im Inneren des Rahmengestells 1 verstaut werden.

Sämtliche Funktionen der Anlage werden über die eingebaute Mess- und Steuereinheit 20 elektronisch angesteuert und überwacht.

Mit der Anlage können auch nachfolgend aufgeführte Verfahren durchgeführt werden.

Beim sogenannten Durchlaufverfahren wird aus dem Mischwasser des Wasseranschlusses A und den Zusatzstoffen aus dem Zuführbehälter 4 für pulverförmige Zusatzstoffe eine kolloidal aufgeschlossene Suspension hergestellt. Dazu wird das Wasserventil 12 geöffnet, das Zulaufventil 13 für Suspensionen geschlossen und das Auflockerungs-Rührwerk 5, die Dosierschnecke 6, der Kolloidalmischer 7 sowie das Schneckenrührwerk 3 angeschaltet. Die mit dem Wasser vermischten pulverförmigen Zusatzstoffe werden vom Kolloidalmischer 7 nach oben gepumpt, von wo sie in den Suspensionsbehälter 2 eingeleitet werden. Im Suspensionsbehälter 2 wird diese kolloidal aufgeschlossene Suspension durch das Schneckenrührwerk 3 verrührt. Die Suspension kann im Suspensionsbehälter 2 gepuffert werden, bis sie von der Pumpe 8 über die Förderleitung B zur Verbrauchsstelle gepumpt wird.

Im sogenannten Homogenisierungsverfahren wird eine im Suspensionsbehälter 2 bereits vorgemischte Suspension zusätzlich homogenisiert oder mit weiteren Feststoffen angereichert. Dazu wird das Wasserzulaufventil 12 geschlossen und das Zulaufventil 13 für Suspensionen geöffnet. Bei stehender Dosierschnecke 6 wird mit dem Kolloidalmischer 7 die im Suspensionsbehälter 2 befindliche Suspension homogenisiert. Hierbei wird die Suspension vom Suspensionsbehälter 2 durch das Ventil 13 und den Durchflussmesser 21 zunächst in den Kolloidalmischer 7 gepumpt, um dann über eine Rohrleitung 25 wieder zurück in den Suspensionsbehälter 2 gepumpt zu werden. Falls die Dosierschnecke 6 hinzugeschaltet wird, wird die Suspension im Suspensionsbehälter 2 unter hoher Scherwirkung mit zusätzlichem Feststoff angereichert. Eine solche Anreicherung der Suspension mit Feststoff kann jedoch auch dadurch erfolgen, dass die Pumpe 8 durch Schließen des Absperrventils 17 und Öffnen des Umpumpventils 16 im sogenannten Umpumpbetrieb arbeitet. Hierbei kann Feststoff über den Sackaufgabetrichter der Venturidüse 9 in den Umpumpstrahl des Umpumprohrs 26 zudosiert werden. Wie in Fig. 1 zu sehen verläuft der Umpumpstrahl durch das Umpumprohr 26 und wird von oben in den Suspensionsbehälter 2 zugeführt. Dieses Verfahren kommt vor allem dann zur Anwendung, wenn ein Zusatzstoff sehr schnell und ohne große Schereinwirkung in die im Suspensionsbehälter 2 befindliche Flüssigkeit eingemischt werden soll.

In einem weiteren Verfahren ist es möglich, Wasser über den Wasseranschluss A, das Wasserzulaufventil 14 und die Pumpe 8 in den Suspensionsbehälter 2 oder aber direkt in die Förderleitung B zu pumpen. Dadurch kann die Suspension im Suspensionsbehälter 2 beziehungsweise in der Förderleitung B verdünnt werden.

## Patentansprüche

1. Kompaktanlage zur Suspensionsaufbereitung
mit Komponenten zum Zuführen mindestens einer Flüssigkeit und mindestens eines Feststoffes, welche in einem Suspensionsbehälter (2) zu einer Suspension vermischt und aufbereitet werden,
**dadurch gekennzeichnet,**
**dass** die Komponenten und der Suspensionsbehälter (2) in einem containerförmigen Rahmengestell (1) angeordnet sind und
**dass** auf einer Oberseite des Rahmengestells (1) eine Lager- und/oder Arbeitsbühne (22) vorgesehen ist.

2. Kompaktanlage nach Anspruch 1,
**dadurch gekennzeichnet,**
**dass** auf der Oberseite des Rahmengestells (1) eine Hebeeinrichtung zum Heben und/oder Transportieren von Arbeitsmaterialien auf die Lager- und/oder Arbeitsbühne (22) angeordnet ist.

3. Kompaktanlage nach Anspruch 2,
**dadurch gekennzeichnet,**
**dass** die Hebeeinrichtung zum Transport der Kompaktanlage (30) einklappbar ist.

4. Kompaktanlage nach Anspruch 2 oder 3,
**dadurch gekennzeichnet,**
**dass** die Hebeeinrichtung als ein Laufkatzkran (11) mit einer Laufkatze ausgebildet ist, welche entlang einer Schiene (23) verfahrbar ist, und
**dass** die Schiene (23) mittels gelenkigen Portalstützen (24) zwischen einer Arbeitsposition und einer Transportposition verschwenkbar ist.

5. Kompaktanlage nach einem der Ansprüche 1 bis 4,
**dadurch gekennzeichnet,**
**dass** die Lager- und/oder Arbeitsbühne (22) durch Gitterrostelemente gebildet ist.

6. Kompaktanlage nach einem der Ansprüche 1 bis 5,
**dadurch gekennzeichnet,**
**dass** das Rahmengestell (1) Containerecken aufweist.

7. Kompaktanlage nach einem der Ansprüche 1 bis 6,
**dadurch gekennzeichnet,**
**dass** die Oberseite des Rahmengestells (1) durch eine Treppe (19) oder Leiter mit einer Unterseite des Rahmengestells (1) verbunden ist.

8. Kompaktanlage nach einem der Ansprüche 1 bis 7,
**dadurch gekennzeichnet,**
**dass** die Kompaktanlage (30) mindestens einen Anschluss (A) zum Zuführen von Flüssigkeiten und mindestens eine Öffnung zum Zuführen von Feststoff aufweist, wobei der mindestens eine Anschluss und/oder die mindestens eine Öffnung an der Oberseite des Rahmengestells (1) ausgebildet sind.

9. Kompaktanlage nach einem der Ansprüche 1 bis 8,
**dadurch gekennzeichnet,**
**dass** der Suspensionsbehälter (2) ein Schneckenrührwerk (3) aufweist.

10. Kompaktanlage nach einem der Ansprüche 1 bis 9,
**dadurch gekennzeichnet,**
**dass** ein Lagerbehälter (4) für pulverförmige Feststoffe über eine Dosierschnecke (6) mit einem Kolloidalmischer (7) verbunden ist.

11. Kompaktanlage nach einem der Ansprüche 1 bis 10,
**dadurch gekennzeichnet,**
**dass** die Lager- und/oder Arbeitsbühne (22) mit einem umlaufenden, abnehmbaren Geländer versehen ist.

12. Kompaktanlage nach einem der Ansprüche 1 bis 11,
**dadurch gekennzeichnet,**
**dass** eine Plane vorgesehen ist, mit welcher die Lager- und/oder Arbeitsbühne (22) überdeckbar ist.

13. Verfahren zum Betreiben einer Kompaktanlage nach einem der Ansprüche 1 bis 12, zur Suspensionsaufbereitung, umfassend die Verfahrensschritte:
- Vermengen von Wasser und Zusatzstoffen zu einer Suspension;
- Pumpen der Suspension zu einem Suspensionsbehälter (2);
- Verrühren der Suspension im Suspensionsbehälter (2); und
- Pumpen der Suspension vom Suspensionsbehälter (2) mittels einer Pumpe (8) über eine Förderleitung zu einer Verbrauchsstelle.
